# EUROPEAN PATENT SPECIFICATION

(11) **EP 2 657 355 B1**
(45) Date of publication and mention of the grant of the patent: **09.12.2015**
(21) Application number: 11850539.5
(22) Date of filing: 16.12.2011
(51) Int. Cl.: C21D 8/12, C22C 38/00, C22C 38/06, C22C 38/60, H01F 1/16

(54) **METHOD OF PRODUCING NON-ORIENTED ELECTRICAL STEEL SHEET**
VERFAHREN ZUR HERSTELLUNG EINES NICHT-ORIENTIERTEM ELEKTRISCHEN STAHLBLECHS
PROCÉDÉ DE FABRICATION D'UNE FEUILLE D'ACIER ÉLECTRIQUE NON-ORIENTÉ

(30) Priority: 22.12.2010 JP 2010285335
(43) Date of publication of application: 30.10.2013
(73) Proprietor: JFE Steel Corporation, Tokyo 100-0011 (JP)
(72) Inventor: ZAIZEN, Yoshiaki, Tokyo 100-0011 (JP); ODA, Yoshihiko, Tokyo 100-0011 (JP); TODA, Hiroaki, Tokyo 100-0011 (JP)
(74) Representative: Stebbing, Timothy Charles
(86) International application number: PCT/JP2011/079150
(87) International publication number: WO 2012/086534

(56) References cited:
- EP-A1- 0 997 540
- EP-A1- 1 411 138
- WO-A1-2007/074987
- JP-A- 5 005 126
- JP-A- 5 214 444
- JP-A- 6 228 644
- JP-A- 6 228 645
- JP-A- H06 228 644
- JP-A- H06 228 645
- JP-A- 2001 316 729
- US-A1- 2006 134 452

## Description

### TECHNICAL FIELD

This invention relates to a method of producing a non-oriented electrical steel sheet, and more particularly to a method of producing a non-oriented electrical steel sheet having excellent magnetic properties in its rolling direction.

### RELATED ART

In the global trends of saving energy in consideration of protection of global environment, it is recently and strongly demanded to render an electric equipment into a higher efficiency and a smaller scale for the purpose of energy saving even in the field of electric equipments. In non-oriented electrical steel sheets widely used as a core material in the electric equipment, therefore, it is strongly desired to improve the magnetic properties or to make a magnetic flux density high and an iron loss low.

Heretofore, in the non-oriented electrical steel sheets, it is attempted to make the magnetic flux density high by properly selecting a kind of alloying element(s) to be added and making crystal grain size before cold-rolling as large as possible and further optimizing a rolling reduction in the cold-rolling, while it is attempted to make the iron loss low by adding an element for enhancing specific resistance or by reducing a sheet thickness to thereby improve the magnetic properties.

In a driving motor or the like for hybrid cars, a segment core is adopting from a viewpoint of improving a yield in the production of a motor core from a steel sheet. The segment core is a technique for improving characteristics of the motor by dividing a core into plural segments and punching out a teeth portion of each segment in the rolling direction of the steel sheet and then assembling them into a core instead that the whole of the core is punched out as a unit from a raw steel sheet as in the conventional technique.

In the segment core, the longitudinal length of the teeth portion concentrating magnetic flux is the rolling direction of the steel sheet, so that the magnetic properties in the rolling direction of an electrical steel sheet as a raw material become very important. As a material having excellent magnetic properties in the rolling direction is mentioned a grain oriented electrical steel sheet having a Goss orientation aligned in the rolling direction. However, it is high in the production cost because a secondary recrystallization process is required, so that it is hardly adopted in the segment core. Therefore, the non-oriented electrical steel sheet is thought to be an optimum material for the segment core if the magnetic flux in the rolling direction can be enhanced.

As a material suitable for such a segment core, for example, Patent Document 1 and Patent Document 2 disclose a method wherein excellent magnetic properties are obtained in an in-plane rolling direction and a vertical direction by coarsening crystal grain size after the hot band annealing and controlling a rolling reduction in the cold-rolling.

JPH 06228645 discloses a method for producing non-oriented silicon steel sheet wherein after a single cold-rolling step the temperature of the sheet is raised at ≥ 100°C/s and the sheet is annealed at 800 to 1100°C.

### PRIOR ART DOCUMENTS

### PATENT DOCUMENTS

Patent Document 1: JP-A-2004-332042
Patent Document 2: JP-A-2008-127600

### SUMMARY OF THE INVENTION

### TASK TO BE SOLVED BY THE INVENTION

In the method of Patent Document 1, however, it is required to reduce impurities in steel to an ultralow volume as well as to make the temperature of a hot band annealing high for rendering a crystal grain size before the cold-rolling into not less than 300 µm, and hence there is a problem in the productivity and cost. Also, in the technique of Patent Document 2, it is necessary to coarsen the crystal grains in the hot band annealing, so that there is a problem in the production cost.

The invention is made in view of considering the above problems of the conventional techniques and is to propose an inexpensive method of producing a non-oriented electrical steel sheet having excellent magnetic properties in the rolling direction of the steel sheet, concretely having a high magnetic flux density.

### SOLUTION FOR TASK

The inventors have made various studies in order to solve the above problems. As a result, it has been newly found that the magnetic properties in the rolling direction are considerably improved by rendering a crystal grain size before cold rolling into not more than 100 µm and making a temperature rising rate in finishing annealing faster than the conventional one in a method of producing a non-oriented electrical steel sheet by hot rolling, cold rolling and finishing annealing likewise the conventional method, and the invention has been accomplished.

That is, the invention is a method of producing a non-oriented electrical steel sheet by hot rolling a raw steel material comprising C: not more than 0.03 mass%, Si: not more than 4 mass%, Mn: 0.03~3 mass%, Al: not more than 3 mass%, S: not more than 0.005 mass%, N: not more than 0.005 mass%, optionally comprising one or two of Sn and Sb in an amount of 0.005~0.5 mass%, respectively, and the balance being Fe and inevitable impurities, and then cold rolling and finishing annealing to produce a non-oriented electrical steel sheet, characterized in that a crystal grain size before the cold rolling is rendered into not more than 100 µm and the finishing annealing is conducted by rapidly heating up to a temperature exceeding recrystallization temperature at an average temperature rising rate of not less than 100°C/sec.

In the production method of the invention, it is preferable that a decarburization annealing is carried out after the rapid heating.

### EFFECT OF THE INVENTION

According to the invention, non-oriented electrical steel sheets having excellent magnetic properties in the rolling direction can be provided inexpensively, so that they can be favorably used as a core material for segment core, transformer core and the like.

### BRIEF DESCRIPTION OF THE DRAWINGS

FIG. 1 is a graph showing an influence of a temperature rising rate in finishing annealing upon a magnetic flux density in a rolling direction.
FIG. 2 is a graph showing an influence of grain size and temperature rising rate before cold rolling upon a magnetic flux density in a rolling direction.

### EMBODIMENTS FOR CARRYING OUT THE INVENTION

At first, an experiment based on the development of the invention will be described below.

A raw steel material (slab) with a chemical composition comprising C: 0.0025 mass%, Si: 3.3 mass%, Mn: 0.16 mass%, Al: 0.001 mass%, N: 0.0019 mass% and S: 0.0010 mass% is heated at 1100°C for 30 minutes and hot rolled to form a hot rolled sheet of 2.0 mm in thickness, and then the hot rolled sheet is subjected to a hot band annealing and a single cold rolling to form a cold rolled sheet having a final thickness of 0.35 mm. Thereafter, the cold rolled sheet is subjected to a finishing annealing by heating up to 740°C in a direct current heating furnace while varying a temperature rising rate within a range of 30~300°C/sec, then heating up to 1000°C at 30°C/sec, soaking at this temperature for 10 seconds and then cooling. A L-direction sample of 180 mm length x 30 mm width, wherein the rolling direction (L-direction) is a longitudinal direction, is cut out from the steel sheet after the finishing annealing and subjected to a single sheet magnetic test to measure a magnetic flux density B₅₀ at a magnetization force of 5000 A/m.

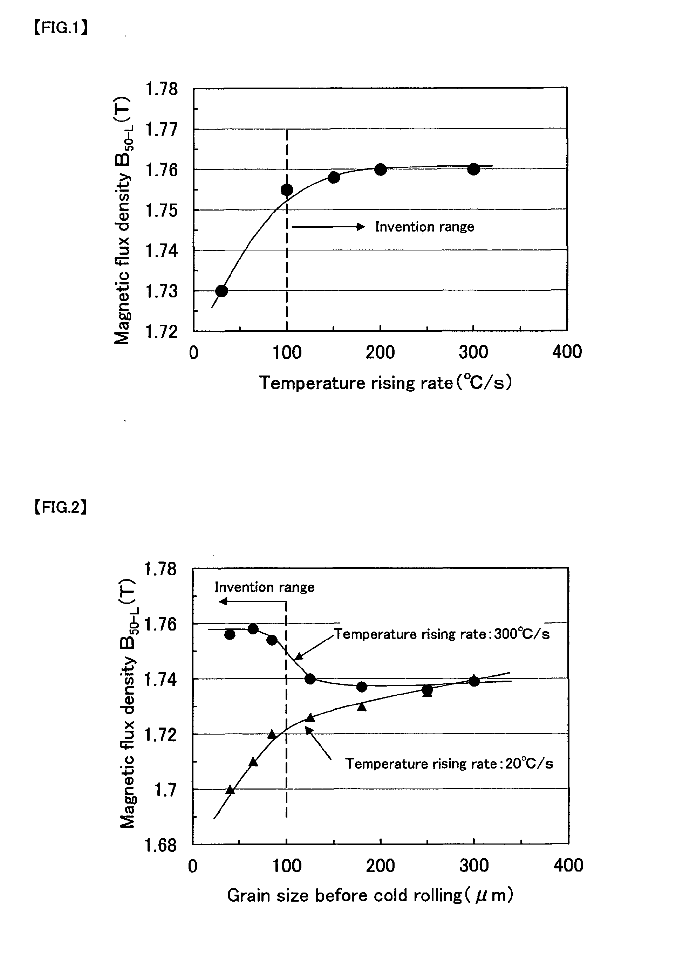

In FIG. 1 are shown the results of the above experiment as a relation between a temperature rising rate and a magnetic flux density in the rolling direction, from which it is understood that electrical steel sheets having a high magnetic flux density in the rolling direction are obtained by rapidly heating at a temperature rising rate of not less than 100°C/sec to conduct the finishing annealing. This is considered due to the following fact.

The primary recrystallization is a phenomenon caused by utilizing a strain energy of dislocation as a driving force. In general, a stored energy of dislocation introduced in the cold rolling (strain energy) has a crystal orientation dependency and satisfies {111} > {110} > {100}. In case of heating at a low rate, therefore, grains of {111} orientation having a high stored energy preferentially cause the recrystallization through the crystal orientation dependency. However, in case of rapid heating, the confinement of the crystal orientation dependency is released to cause recrystallization of another orientation, so that grains of {110} or {100} orientation increase, and hence the magnetic properties in L-direction are considered to be improved.

In the conventional production method of non-oriented electrical steel sheets, it is attempted to suppress the occurrence of grains of {111} orientation (hereinafter abbreviated as "{111} grains" or the like) and improve the magnetic properties by conducting a hot band annealing at higher temperatures and making a crystal grain size before cold rolling large. In case of rapid heating, however, the recrystallization behavior largely changes as mentioned above. Now, an influence of the crystal grain size before cold rolling upon the magnetic properties (magnetic flux density in the rolling direction) is examined.

A slab containing C: 0.0025 mass%, Si: 3.3 mass%, Mn: 0.15 mass%, Al: 0.001 mass%, N: 0.0022 mass% and S: 0.0013 mass% is heated at 1100°C for 30 minutes and hot rolled to form a hot rolled sheet of 2.0 mm in thickness. Then, the hot rolled sheet is subjected to a hot band annealing under conditions that the annealing temperature is varied within a range of 850~1100°C and kept for 30 seconds, whereby the crystal grain size is changed before the cold rolling. Thereafter, the hot rolled sheet is subjected to a single cold rolling to form a cold rolled sheet having a final thickness of 0.35 mm and further to a finishing annealing by heating up to 740°C in a direct current heating furnace at a temperature rising rate of 20°C/sec or 300°C/sec, further heating up to 1020°C at 30°C/sec, soaking at this temperature for 10 seconds and then cooling. A L-direction sample of 180 mm length x 30 mm width, wherein the rolling direction (L-direction) is a longitudinal direction, is cut out from the cold rolled steel sheet after the finishing annealing and subjected to a single sheet magnetic test to measure a magnetic flux density B₅₀ at a magnetization force of 5000 A/m.

In FIG. 2 are shown the results of the above experiment. As seen from FIG. 2, when the rapid heating is carried out at 300°C/sec, the magnetic flux density in the rolling direction is increased in such a region that the grain size before the cold rolling is not more than 100 µm, while when the heating is carried out at a low rate of 20°C/sec, the magnetic flux density is decreased inversely. Although this reason is not clear at this time, it is considered as follows.

When the hot band annealing temperature is low and the crystal gain before the cold rolling is small, {111} grains preferentially grow in the recrystallization annealing after the cold rolling. To this end, when the temperature rising rate in the finishing annealing is slow as in the usual annealing, {111} grains are developed. However, when the temperature rising rate is raised as previously mentioned, the recrystallization of {111} grains is suppressed and {110} grains or {100} grains are relatively increased. Further, the {110} grains or {100} grains are preferentially grown by encroaching {111} grains in the subsequent soaking, whereby the magnetic properties in the rolling direction are improved.

On the other hand, when the hot band annealing temperature is high and the crystal grains before the cold rolling are large, {110} grains or {100} grains are easily recrystallized by raising the temperature rising rate as previously mentioned. However, since the grain size before the cold rolling is large, the ratio of {111} grains after the recrystallization becomes small as compared with the case that the grain size is small, so that it is considered that the ratio of {111} grains encroached by the {110} grains or {100} grains becomes small in the subsequent soaking and the {110} grains or {100} grains are not sufficiently developed and hence the improvement of the magnetic properties in the rolling direction is not recognized.

From the above experimental results, it can be seen that it is effective to render the grain size before the cold rolling into not more than 100 µm and conduct the heating in the finishing annealing by rapidly heating at the temperature rising rate of not less than 100°C/sec in order to improve the magnetic properties in the rolling direction. Moreover, the term "grain size" used herein means an average crystal grain size at a L-section measured by a linear analysis. The grain size before the cold rolling is preferable to be not more than 90 µm.

The invention is developed based on the above knowledge.

The chemical composition of the non-oriented electrical steel sheet of the invention will be described below.

### C: not more than 0.03 mass%

Solid-solute C in steel sticks dislocation introduced in the cold rolling and a deformation band is formed easily. The deformation band has an effect of preferentially growing Goss orientation grains of {110}<001> in the recrystallization during the finishing annealing and improving the magnetic properties in the rolling direction. However, when C content exceeds 0.03 mass%, there is fear that decarburization becomes insufficient as mentioned later, so that an upper limit of C content in the raw steel material is 0.03 mass% in the invention.

On the other hand, when C is existent in an amount of not less than 0.005 mass% at a stage of a product, magnetic aging is caused to deteriorate the magnetic properties. Therefore, if C content in the raw steel material exceeds 0.005 mass%, it is preferable that C content in steel is reduced to not more than 0.005 mass% by decarburization annealing prior to the formation of a product. The decarburization annealing may be conducted at any time after the rapid heating in the finishing annealing. More preferably, C content after the decarburization is not more than 0.003 mass%. Moreover, C is included inevitably, but may be 0 mass% in principle.

### Si: not more than 4 mass%

Si is an element having an effect of increasing a specific resistance of steel to reduce an iron loss. However, when it is added in an amount exceeding 4 mass%, steel is difficult to be produced by rolling because it is hardened. Therefore, the upper limit of Si is 4 mass%. Moreover, when the iron loss property is stressed, the addition of not less than 1.0 mass% is preferable.

### Mn: 0.03~3 mass%

Mn is an element required for preventing hot brittleness through S to improve hot workability. However, the above effect is small in amount of less than 0.03 mass%, while the addition exceeding 3 mass% saturates the above effect and brings about the increase of the raw material cost. Therefore, Mn content is a range of 0.03-3 mass%.

### Al: not more than 3 mass%

Al is an element having an effect of increasing a specific resistance of steel to reduce an iron loss likewise Si. However, the addition exceeding 3 mass% deteriorates the rolling property, so that the addition of 3 mass% is an upper limit. Moreover, the effect of improving the magnetic flux density in the rolling direction according to the invention is considerably developed when Al content is not more than 0.01 mass%, so that Al is preferable to be not more than 0.01 mass% when the effect of reducing the iron loss through Al is not utilized. Although Al is inevitably included by adding as a deoxidizing agent, it may be 0 mass% in principle.

### S: not more than 0.005 mass%, N: not more than 0.005 mass%

S and N are incidental impurities decreasing the magnetic properties in the invention, so that each amount is limited to not more than 0.005 mass%. Also, these elements may be 0 mass% in principle.

The non-oriented electrical steel sheet of the invention may contains Sn and Sb within the following range in addition to the above ingredients.

### Each of Sn and Sb: 0.005~0.5 mass%

Sn and Sb are elements not only improving the texture to increase the magnetic flux density but also preventing oxidation or nitriding of the surface layer on the steel sheet to suppress the formation of fine grains in the surface layer to thereby improve the magnetic properties. In order to develop such an effect, it is preferable to add either one of Sn and Sb in an amount of not less than 0.005 mass%. On the other hand, when each content of Sn and Sb exceeds 0.5 mass%, there is a fear of obstructing the crystal grain growth in the finishing annealing to deteriorate the magnetic properties. Therefore, each of Sn and Sb is preferable to be added within a range of 0.005~0.5 mass%.

Moreover, it is not refused that Sn and/or Sb of less than 0.005 mass% is included as an impurity.

In the non-oriented electrical steel sheet of the invention, the balance other than the above ingredients is Fe and incidental impurities. However, the addition of an ingredient other than the above ones is not refused within a scope not damaging the effect of the invention. As a harmful element are exemplified Ti, V, Nb and the like of not less than 0.003 mass%. As a harmless element are exemplified P and the like of not more than 0.2 mass%.

Next, the production method of the non-oriented electrical steel sheet of the invention will be described.

The non-oriented electrical steel sheet of the invention is produced by melting a steel having the above-described chemical composition adapted to the invention through a commonly well-known refining process using a convertor, an electric furnace, a vacuum degassing apparatus or the like, shaping into a raw steel material (slab) through a continuous casting process or an ingot making-slabbing process, hot rolling the slab through a commonly well-known method, hot band annealing if necessary, cold rolling, finishing annealing or further decarburization annealing under the following condition.

### Hot band annealing

The hot band annealing is carried out for rendering the texture of the steel sheet after the hot rolling and before the cold rolling into a preferable recrystallization structure of regulated and finely divided grains. However, if the hot band annealing is conducted under conditions of higher temperature and longer time as in the conventional techniques, the crystal grains are coarsened exceeding 100 µm and hence the magnetic flux density in the rolling direction is lowered when rapid heating is carried out in the finishing annealing. In the invention, therefore, when the hot band annealing is conducted, for rendering the crystal grain size into not more than 100 µm, it is preferable to conduct the hot band annealing at a lower temperature for a shorter time. Concretely, the annealing is conducted preferably under a condition that a soaking temperature is 800~950°C and a keeping time is not more than 60 seconds, more preferably under a condition that a temperature is not lower than 800°C but lower than 920°C and the time is not more than 60 seconds. By the hot band annealing can be well improved the magnetic flux density and iron loss property after the finishing annealing.

### Cold rolling

As the subsequent cold rolling may be a single cold rolling or two or more cold rollings with an intermediate annealing therebetween. Also, the cold rolling reduction is not particularly limited as long as the condition is same as in the common production of the non-oriented electrical steel sheet.

### Finishing annealing

In the finishing annealing after the cold rolling (recrystallization annealing), it is necessary to conduct rapid heating at an average temperature rising rate of not less than 100°C/sec up to a temperature exceeding recrystallization temperature. Moreover, an end temperature in the rapid heating is preferable to be higher for causing recrystallization in a short time, but if it exceeds 850°C, the equipment burden required for heating becomes too large and the equipment cost becomes increased. Therefore, the end temperature in the rapid heating is preferably not higher than 850°C, more preferably not higher than 740°C.

After the rapid heating up to a temperature exceeding recrystallization temperature, the sheet is further heated up to a soaking temperature, but a temperature rising rate thereof is not particularly limited. It is preferable that the soaking temperature is 850~1100°C and the keeping time is 5-60 seconds. When the soaking temperature is lower than 850°C or the keeping time is less than 5 seconds, the grain growth does not proceed, while when the soaking temperature exceeds 1100°C or the keeping time exceeds 60 seconds, the burden in the annealing equipment becomes large. As a more preferable soaking condition, it is desired to keep the sheet at a temperature of 900~1050°C for 10-40 seconds.

Moreover, the method of making the temperature rising rate not less than 100°C/sec is not particularly limited because a direct current heating method or an induction heating method can be used.

### Decarburization annealing

In order to prevent magnetic aging in a product sheet if the C content in the raw material is more than 0.005 mass%, the steel sheet after the soaking is preferable to be subsequently subjected to decarburization annealing to reduce the C content to not more than 0.005 mass%, more preferably to not more than 0.003 mass%. Moreover, the decarburization annealing may be carried out at any time after the rapid heating. Also, the decarburization may be conducted under commonly well-known conditions. For example, there can be exemplified a condition of 850°C x 30 seconds in an oxidizing atmosphere having a dew point of 30°C.

Moreover, cooling condition after the soaking or further after the decarburization annealing are not particularly limited, and may be, for example, a gas cooling of not more than 30°C/sec.

Preferably, the steel sheet after the finishing annealing may be subsequently subjected to the formation of an insulating coat, if necessary, to provide a product sheet.

### EXAMPLES

Each of steel Nos. 1-34 having a chemical composition shown in Table 1 is melted to form a slab. Next, the slab is heated at 1080°C for 30 minutes and hot rolled to form a hot rolled sheet of 2.3 mm in thickness. Then, the hot rolled sheet is subjected to a hot band annealing of 850~1100°C x 30 seconds and further to a single cold rolling to form a cold rolled sheet having a final thickness of 0.35 mm. Thereafter, the cold rolled sheet is subjected to a finishing annealing by heating in a direct current heating furnace while varying a temperature rising rate and an end temperature of rapid heating as shown in Table 2, further heating to a soaking temperature at 30°C/sec, keeping for 10 seconds and the cooling. Moreover, when C content in the raw steel material is not less than 0.005%, the steel sheet is heated to 850°C, subjected to decarburization annealing of 850°C x 30 seconds in an atmosphere having a dew point of 30°C to reduce C content to not more than 0.0030 mass%, and then heated to the soaking temperature. In a part of the steel sheets, the crystal grain size is changed by varying an annealing time for the hot band annealing.

**Table 1**

| Steel No. | Chemical composition (mass%) | | | | | | | | Remarks |
|---|---|---|---|---|---|---|---|---|---|
| | C | Si | Mn | S | Al | N | Sn | Sb | |
| 1 | 0.0025 | 3.0 | 0.15 | 0.0012 | 0.001 | 0.0021 | 0.0010 | 0.0010 | Invention steel |
| 2 | 0.0050 | 3.0 | 0.15 | 0.0021 | 0.001 | 0.0020 | 0.0010 | 0.0010 | Invention steel |
| 3 | 0.010 | 3.0 | 0.10 | 0.0025 | 0.001 | 0.0018 | 0.0010 | 0.0010 | Invention steel |
| 4 | 0.020 | 3.0 | 0.15 | 0.0014 | 0.001 | 0.0015 | 0.0010 | 0.0010 | Invention steel |
| 5 | 0.05 | 3.3 | 0.15 | 0.0012 | 0.001 | 0.0017 | 0.0010 | 0.0010 | Comparative steel |
| 6 | 0.10 | 3.3 | 0.15 | 0.0014 | 0.001 | 0.0018 | 0.0010 | 0.0010 | Comparative steel |
| 7 | 0.030 | 3.7 | 0.15 | 0.0018 | 0.001 | 0.0025 | 0.0010 | 0.0010 | Invention steel |
| 8 | 0.020 | 5.0 | 0.15 | 0.0014 | 0.001 | 0.0015 | 0.0010 | 0.0010 | Comparative steel |
| 9 | 0.015 | 3.0 | 0.15 | 0.0026 | 0.001 | 0.0015 | 0.0010 | 0.0010 | Invention steel |
| 10 | 0.0030 | 3.0 | 0.15 | 0.0014 | 0.100 | 0.0015 | 0.0010 | 0.0010 | Invention steel |
| 11 | 0.0030 | 3.0 | 0.15 | 0.0022 | 0.500 | 0.0028 | 0.0010 | 0.0010 | Invention steel |
| 12 | 0.0030 | 2.0 | 0.15 | 0.0014 | 1.200 | 0.0029 | 0.0010 | 0.0010 | Invention steel |
| 13 | 0.0025 | 1.8 | 0.15 | 0.0014 | 2.50 | 0.0022 | 0.0010 | 0.0010 | Invention steel |
| 14 | 0.0030 | 2.0 | 0.10 | 0.0015 | 4.50 | 0.0021 | 0.0010 | 0.0010 | Comparative steel |
| 15 | 0.0025 | 3.0 | 0.07 | 0.0014 | 0.001 | 0.0015 | 0.0010 | 0.0010 | Invention steel |
| 16 | 0.0025 | 2.5 | 1.0 | 0.0016 | 0.001 | 0.0015 | 0.0010 | 0.0010 | Invention steel |
| 17 | 0.0020 | 2.0 | 2.5 | 0.0016 | 0.001 | 0.0017 | 0.0010 | 0.0010 | Invention steel |
| 18 | 0.0025 | 3.0 | 4.0 | 0.0018 | 0.001 | 0.0015 | 0.0010 | 0.0010 | Comparative steel |
| 19 | 0.0025 | 3.0 | 0.15 | 0.0090 | 0.001 | 0.0015 | 0.0010 | 0.0010 | Comparative steel |
| 20 | 0.0025 | 3.0 | 0.15 | 0.0019 | 0.001 | 0.0080 | 0.0010 | 0.0010 | Comparative steel |
| 21 | 0.0020 | 3.0 | 0.15 | 0.0014 | 0.001 | 0.0015 | 0.050 | 0.0010 | Invention steel |
| 22 | 0.0020 | 3.0 | 0.15 | 0.0024 | 0.001 | 0.0024 | 0.030 | 0.050 | Invention steel |
| 23 | 0.0100 | 3.0 | 0.07 | 0.0014 | 0.001 | 0.0015 | 0.0080 | 0.030 | Invention steel |
| 24 | 0.0070 | 3.0 | 0.15 | 0.0014 | 0.001 | 0.0023 | 0.0010 | 0.0080 | Invention steel |
| 25 | 0.0200 | 3.0 | 0.15 | 0.0028 | 0.001 | 0.0015 | 0.10 | 0.0010 | Invention steel |
| 26 | 0.0020 | 3.0 | 0.15 | 0.0018 | 0.001 | 0.0022 | 0.0010 | 0.10 | Invention steel |
| 27 | 0.0020 | 3.0 | 0.15 | 0.0018 | 0.001 | 0.0022 | 0.0010 | 0.0010 | Invention steel |
| 28 | 0.0025 | 3.0 | 0.16 | 0.0017 | 0.001 | 0.0014 | 0.0010 | 0.0010 | Invention steel |
| 29 | 0.0020 | 3.0 | 0.16 | 0.0013 | 0.001 | 0.0024 | 0.0010 | 0.0010 | Invention steel |
| 30 | 0.0025 | 3.0 | 0.15 | 0.0015 | 0.001 | 0.0019 | 0.0010 | 0.0010 | Invention steel |
| 31 | 0.0025 | 3.0 | 0.15 | 0.0015 | 0.001 | 0.0019 | 0.0010 | 0.0010 | Invention steel |
| 32 | 0.0025 | 3.0 | 0.15 | 0.0015 | 0.001 | 0.0019 | 0.0010 | 0.0010 | Invention steel |
| 33 | 0.0025 | 3.0 | 1.50 | 0.0007 | 0.001 | 0.0020 | 0.0010 | 0.0010 | Invention steel |
| 34 | 0.0025 | 3.0 | 0.15 | 0.0020 | 1.000 | 0.0021 | 0.0010 | 0.0010 | Invention steel |
| 35 | 0.0025 | 1.0 | 0.20 | 0.0018 | 0.001 | 0.0020 | 0.0010 | 0.0010 | Invention steel |
| 36 | 0.0025 | 1.5 | 0.20 | 0.0018 | 0.001 | 0.0020 | 0.0010 | 0.0010 | Invention steel |
| 37 | 0.0020 | 3.0 | 0.15 | 0.0015 | 0.001 | 0.0024 | 0.0010 | 0.0010 | Invention steel |
| 38 | 0.0020 | 3.0 | 0.15 | 0.0015 | 0.001 | 0.0024 | 0.0010 | 0.0010 | Invention steel |

**Table 2**

| Steel sheet No. | Steel No. | Annealing of hot rolled sheet | | Grain size before cold rolling (µm) | Finishing annealing conditions | | | Magnetic properties | Remarks |
|---|---|---|---|---|---|---|---|---|---|
| | | Annealing temperature (°C) | Annealing time (s) | | End temperature of rapid heating (°C) | Temperature rising rate of rapid heating (°C/s) | Soaking temperature (°C) | Magnetic flux density B_{50-L} (T) | |
| 1 | 1 | 870 | 30 | 60 | 750 | 150 | 950 | 1.76 | Invention Example |
| 2 | 2 | none | | 25 | 750 | 150 | 950 | 1.74 | Invention Example |
| 3 | 2 | 900 | 30 | 70 | 750 | 150 | 950 | 1.76 | Invention Example |
| 4 | 2 | 900 | 60 | 80 | 750 | 150 | 950 | 1.76 | Invention Example |
| 5 | 2 | 900 | 90 | 115 | 750 | 150 | 950 | 1.73 | Comparative Example |
| 6 | 3 | 930 | 30 | 85 | 740 | 200 | 950 | 1.78 | Invention Example |
| 7 | 4 | 900 | 30 | 70 | 740 | 200 | 950 | 1.79 | Invention Example |
| 8 | 5 | 880 | 30 | 65 | 800 | 300 | 850 | 1.71 | Comparative Example |
| 9 | 6 | 880 | 30 | 65 | 740 | 300 | 850 | 1.71 | Comparative Example |
| 10 | 7 | 950 | 30 | 88 | 740 | 300 | 1025 | 1.77 | Invention Example |
| 11 | 8 | 930 | 30 | 87 | breakage during cold rolling | | | | Comparative Example |
| 12 | 9 | 900 | 30 | 71 | 730 | 120 | 950 | 1.79 | Invention Example |
| 13 | 10 | 900 | 30 | 72 | 730 | 120 | 1000 | 1.79 | Invention Example |
| 14 | 11 | 900 | 30 | 70 | 830 | 150 | 950 | 1.75 | Invention Example |
| 15 | 12 | 900 | 30 | 70 | 820 | 150 | 950 | 1.75 | Invention Example |
| 16 | 12 | 900 | 60 | 80 | 820 | 150 | 950 | 1.75 | Invention Example |
| 17 | 12 | 900 | 90 | 110 | 820 | 150 | 950 | 1.72 | Comparative Example |
| 18 | 13 | 900 | 30 | 70 | 780 | 200 | 900 | 1.75 | Invention Example |
| 19 | 14 | 1000 | 30 | 90 | breakage during cold rolling | | | | Comparative Example |
| 20 | 15 | 870 | 30 | 60 | 740 | 250 | 950 | 1.76 | Invention Example |
| 21 | 16 | 900 | 30 | 70 | 740 | 250 | 950 | 1.77 | Invention Example |
| 22 | 17 | 900 | 30 | 70 | 740 | 250 | 900 | 1.78 | Invention Example |
| 23 | 18 | 900 | 30 | 70 | 740 | 300 | 900 | 1.73 | Comparative Example |
| 24 | 19 | 950 | 30 | 87 | 780 | 300 | 1000 | 1.70 | Comparative Example |
| 25 | 20 | 950 | 30 | 85 | 780 | 300 | 1000 | 1.71 | Comparative Example |
| 26 | 21 | 900 | 30 | 70 | 740 | 350 | 1025 | 1.77 | Invention Example |
| 27 | 22 | 900 | 30 | 70 | 740 | 350 | 1025 | 1.77 | Invention Example |
| 28 | 23 | 860 | 30 | 62 | 730 | 350 | 1000 | 1.78 | Invention Example |
| 29 | 24 | 860 | 30 | 62 | 740 | 250 | 1000 | 1.77 | Invention Example |
| 30 | 25 | 890 | 30 | 68 | 730 | 250 | 1000 | 1.79 | Invention Example |
| 31 | 26 | 900 | 30 | 70 | 740 | 350 | 1025 | 1.77 | Invention Example |
| 32 | 27 | 900 | 30 | 70 | 740 | 350 | 1025 | 1.77 | Invention Example |
| 33 | 28 | 900 | 30 | 70 | 810 | 30 | 950 | 1.69 | Comparative Example |
| 34 | 29 | 900 | 30 | 70 | 740 | 80 | 950 | 1.70 | Comparative Example |
| 35 | 30 | 1030 | 30 | 150 | 740 | 200 | 1000 | 1.72 | Comparative Example |
| 36 | 31 | 1060 | 30 | 180 | 780 | 200 | 1000 | 1.72 | Comparative Example |
| 37 | 32 | 1090 | 30 | 210 | 790 | 200 | 1000 | 1.71 | Comparative Example |
| 38 | 33 | 870 | 30 | 60 | 740 | 150 | 950 | 1.77 | Invention Example |
| 39 | 34 | 900 | 30 | 70 | 750 | 300 | 950 | 1.75 | Invention Example |
| 40 | 35 | 900 | 40 | 70 | 750 | 200 | 900 | 1.89 | Invention Example |
| 41 | 36 | 920 | 50 | 80 | 750 | 250 | 900 | 1.88 | Invention Example |
| 42 | 37 | 950 | 40 | 85 | 740 | 250 | 1000 | 1.77 | Invention Example |
| 43 | 38 | 900 | 50 | 75 | 740 | 300 | 1000 | 1.77 | Invention Example |

From each of the thus obtained cold rolled steel sheets after the finishing annealing is cut out a L-direction sample of 180 mm length x 30 mm width, which is subjected to a single sheet magnetic test to measure a magnetic flux density in the rolling direction (B_{50-L}). The measured results are also shown in Table 2.

As seen from Table 2, the steel sheets of Invention Examples obtained by controlling the crystal grain size before the cold rolling to not more than 100 µm and making the temperature rising rate in the finishing annealing not less than 100°C/sec have excellent magnetic properties in which the magnetic flux density in the rolling direction B_{50-L} is not less than 1.74 T.

## Claims

1. A method of producing a non-oriented electrical steel sheet by hot rolling a raw steel material comprising C: not more than 0.03 mass%, Si: not more than 4 mass%, Mn: 0.03~3 mass%, Al: not more than 3 mass%, S: not more than 0.005 mass%, N: not more than 0.005 mass%, optionally comprising one or two of Sn and Sb in an amount of 0.005-0.5 mass%, respectively, and the balance being Fe and incidental impurities, hot band annealing, cold rolling and then finishing annealing to produce a non-oriented electrical steel sheet, **characterized in that** a crystal grain size before the cold rolling is rendered into not more than 100 µm and the finishing annealing is conducted by rapidly heating up to a temperature exceeding recrystallization temperature at an average temperature rising rate of not less than 100°C/sec.

2. A method of producing a non-oriented electrical steel sheet according to claim 1, wherein a decarburization annealing is carried out after the rapid heating.

## Patentansprüche

1. Verfahren zur Herstellung eines nichtorientierten Elektrostahlblechs durch Heißwalzen eines Rohstahlmaterials umfassend C: nicht mehr als 0,03 Masse-%, Si: nicht mehr als 4 Masse-%, Mn: 0,03 - 3 Masse-%, Al: nicht mehr als 3 Masse-%, S: nicht mehr als 0,005 Masse-%, N: nicht mehr als 0,005 Masse-%, wahlweise umfassend eines oder zwei von Sn und Sb in einer Menge von jeweils 0,005 ~ 0,5 Masse-%, wobei der Rest Fe und zufällige Verunreinigungen sind, Heißbandausglühen, Kaltwalzen und dann Endbearbeitungsglühen, um ein nichtorientiertes Elektrostahlblech herzustellen, **dadurch gekennzeichnet, dass** eine Kristallkorngröße vor dem Kaltwalzen auf nicht mehr als 100 µm gebracht wird und das Endbearbeitungsglühen durch schnelles Erhitzen bis auf eine Temperatur, die die Umkristallisierungstemperatur übersteigt, mit einer durchschnittlichen Temperaturanstiegsrate von nicht mehr als 100 °C/s durchgeführt wird.

2. Verfahren zur Herstellung eines nichtorientierten Elektrostahlblechs nach Anspruch 1, wobei ein Entkohlungsglühen nach dem schnellen Erhitzen durchgeführt wird.

## Revendications

1. Procédé de production d'une tôle d'acier électrique non orientée par un laminage à chaud d'un matériau d'acier brut comprenant C : non supérieure à 0,03% en masse, Si : non supérieure à 4% en masse, Mn : 0,03~3 % en masse, Al : non supérieure à 3 % en masse, S : non supérieure à 0,005 % en masse, N : non supérieure à 0,005 % en masse, comprenant en option un ou deux de Sn et Sb en une quantité de 0,005~0,5 % en masse, respectivement, et le reste étant Fe et des impuretés accidentelles, recuit de la tôle laminée à chaud, laminage à froid suivi d'un recuit de finition pour produire la tôle d'acier électrique non orientée, **caractérisé en ce qu'**une taille de grain cristallin avant le laminage à froid est amenée à ne pas être plus élevée que 100 µm, et le recuit de finition est exécuté en chauffant rapidement à une température dépassant la température de recristallisation à un taux d'augmentation de température moyen non inférieur à 100°C/sec.

2. Procédé de production d'une tôle d'acier électrique non orientée selon la revendication 1, dans lequel un recuit de décarburation est exécuté après le chauffage rapide.
